# NEUE EUROPÄISCHE PATENTSCHRIFT

(11) **EP 3 633 260 B2**
(45) Veröffentlichungstag und Bekanntmachung des Hinweises auf die Entscheidung über den Einspruch: **13.08.2025**
(45) Hinweis auf die Patenterteilung: 30.06.2021
(21) Anmeldenummer: 19154097.0
(22) Anmeldetag: 29.01.2019
(51) Int. Cl.: F16L 55/46, F16L 55/00, F16L 55/18, F16L 55/26, B65H 75/44, F16L 55/30, F16L 55/48, G03B 37/00, G02B 23/24, F16L 101/30, B65H 51/10

(54) **VORSCHUBEINHEIT FÜR EIN KAMERAINSPEKTIONSSYSTEM**
ADVANCING UNIT FOR A CAMERA INSPECTION SYSTEM
UNITÉ D'AVANCE POUR UN SYSTÈME D'INSPECTION DE CAMÉRA

(30) Priorität: 05.10.2018 DE 202018105695 U
(43) Veröffentlichungstag der Anmeldung: 08.04.2020
(73) Patentinhaber: Kummert, Bernhard, 97447 Gerolzhofen (DE)
(72) Erfinder: Kummert, Bernhard, 97447 Gerolzhofen (DE)
(74) Vertreter: advotec.

(56) Entgegenhaltungen:
- EP-A1- 3 106 734
- EP-A1- 3 633 260
- DE-A1- 102017 105 747
- DE-A1- 4 210 895
- DE-A1- 4 229 787
- DE-U1- 202012 007 019
- US-A- 2 736 949
- US-A1- 2007 051 192

## Beschreibung

Die Erfindung betrifft eine Vorschubeinheit für ein Kamerainspektionssystem mit einem biegsamen Stabelement, an dessen freies Ende eine Inspektionskamera koppelbar ist, nach dem Oberbegriff des Anspruchs 1.

Derartige Vorschubeinheiten werden zur Bildung von Kamerainspektionssystemen verwendet und dienen der geordneten Einführung einer Inspektionskamera in unzugängliche Bereiche, beispielsweise in Rohre und Abwasserkanäle. Die Inspektionskamera ist gattungsgemäß an einem freien Ende eines Stabelements befestigt, welches auf einer Haspel aufgespult ist.

Bei bekannten Kamerainspektionssystemen, wie beispielsweise bei dem aus der DE10114630C1 bekannten System, wird der Vorschub des Stabelements zur Positionierung der Inspektionskamera händisch vom Bedienpersonal realisiert. Dies bedeutet mit anderen Worten, dass eine Bedienperson das Stabelement von der Haspel abspult und von Hand beispielsweise in einen Abwasserkanal oder ein Rohr hineinschiebt oder aus diesem zurückzieht. Diese Arbeit ist aufgrund der Steifigkeit des Stabelements für das Bedienpersonal körperlich stark belastend. Außerdem wird die maximale Reichweite, bis zu der das Stabelement vorgeschoben werden kann, von der durch das Bedienpersonal händisch aufbringbaren Vorschubkraft begrenzt. Auch ist es nachteilig, dass zur Inspektion von Abwasserkanälen und Rohren mit entsprechenden Inspektionssystemen mindestens zwei Bedienpersonen vorhanden sein müssen, da eine Bedienperson bereits vollständig damit ausgelastet ist die Inspektionskamera durch Vorschub des Stabelements zu positionieren.

Zur Vermeidung dieser Problematik ist weiterhin eine gattungsgemäße Vorschubeinheit aus der DE 20 2013 104 456 U1 bekannt, die an der Haspel zur Speicherung des Stabelements angeordnet ist, wobei mit der Vorschubeinheit das Stabelement zum Positionieren der Inspektionskamera motorisch vorgeschoben und/oder zurückgezogen werden kann. Aus der US 2007/051192 A1 ist ein komplexes System zur Untersuchung unter Druck stehender Gasleitungen mit einer Kamera bekannt, welches an einer Druckgasleitung montiert werden kann. Dazu umfasst das gattungsgemäße Inspektionssystem eine Kamera, welche am freien Ende einer Schubstange angebracht ist, ein Eintrittsrohr, zum Einführen von Schubstange und Kamera in die Rohrleitung und eine Dichtungsvorrichtung, zur Verhinderung des Austritts von Gas aus der Rohrleitung während der Inspektion der Druckgasleitung. Nachteilig an den gattungsgemäßen Vorschubeinheiten ist jedoch, dass bei komplexen Rohrverzweigungen und Rohröffnungen die Biegsamkeit des Stabelements zu einer Schlaufenbildung im Rohr bzw. Kanal führt. Aufgrund der Schlaufenbildung kommt es einerseits zu einem erhöhten Kraftaufwand, der im Extremfall sogar die Leistung der Vorschubeinheit übersteigen könnte und andererseits zu Ungenauigkeiten in der Positionierung der Inspektionskamera führt, da die zurückgelegte Strecke der Inspektionskamera anhand der Länge des abgespulten Stabelements nicht mehr korrekt rückverfolgbar ist. Der EP 3 106 734 A1 ist ein System zur Wartung oder Inspektion einer unter Druck stehenden Rohrleitung zu entnehmen, in welche ein Roboter eingebracht werden kann, ohne dass Gas aus dieser austritt. Der beschriebene Roboter kann sich selbstständig in der Rohrleitung fortbewegen. Jedoch erfordern derartige gattungsgemäße Vorrichtungen einen komplexen Aufbau, eine aufwändige Steuerung und aufgrund der Größe der Vorrichtung eine Montage durch eine Mehrzahl von Personen und sind somit weder flexibel noch aufwandsarm einsetzbar, was den Einsatz an einer Vielzahl von Rohren, insbesondere Wasserleitungen und Abwasserkanälen, nicht praktikabel macht.

Die DE 1020171055747 A1 offenbart die Befestigung einer Vorschubeinrichtung an einer Rohröffnung mit infaltierbaren Kissen.

Die DE202012007019 U1 offenbart eine Klemmeinrichtung die im Rohrinneren eingreift.
Ausgehend von diesem Stand der Technik ist es deshalb Aufgabe der vorliegenden Erfindung, eine neue Vorschubeinheit für ein Kamerainspektionssystem vorzuschlagen, die die oben beschriebenen Nachteile vermeidet.

Diese Aufgabe wird durch eine Vorschubeinheit nach der Lehre des Anspruchs 1 gelöst.

Vorteilhafte Ausführungsformen der Erfindung sind Gegenstand der Unteransprüche.

Die erfindungsgemäße Vorschubeinheit beruht auf dem Grundgedanken, dass an der Vorschubeinheit eine Klemmeinrichtung vorgesehen ist, mit der die Vorschubeinheit an einer Rohröffnung fixiert werden kann. Im Rahmen der vorliegenden Erfindung schließt der Begriff Rohröffnung ein offenes Rohrende, eine Revisionsöffnung an einem Rohr oder einem Kanal sowie ein offenes Kanalende oder Ähnliches ein. Durch das direkte Fixieren der Vorschubeinheit an der Öffnung des zu untersuchenden Rohrs entfällt die Notwendigkeit, das Stabelement beim Einführen in einen Kanal um Ecken herumführen zu müssen. Stattdessen kann beim Vorschieben bzw. Zurückziehen des Stabelements ein optimaler Kraftschluss aufgebaut werden, da eine Schlaufenbildung vermieden wird. Die Vermeidung von Schlaufen im Stabelement führt außerdem dazu, dass die Fehleranfälligkeit bei der Ermittlung der Länge des abgespulten Stabelements minimiert wird und somit die Genauigkeit der Positionierung der Inspektionskamera erhöht werden kann. Dadurch wird auch die Qualität der bei der Inspektion von Abwasserkanälen oder Rohren übermittelten Daten, beispielsweise für die Durchführung von Grabarbeiten zur Reparatur von Rohren, erhöht. Um eine möglichst einfache und zugleich stabile Klemmung gewährleisten zu können, ist es vorgesehen, dass die Klemmeinrichtung zwei Klemmbacken aufweist. Erfindungsgemäß ist zumindest eine Klemmbacke beweglich ausgebildet. Dadurch kann die feststehende Klemmbacke an der Rohröffnung zur Anlage gebracht werden und die Vorschubeinheit kann grob positioniert werden, bevor die beweglich ausgebildete Klemmbacke zur Anlage gebracht wird und somit die Vorschubeinheit an der Rohröffnung fixiert wird. In diesem Zusammenhang hat es sich als vorteilhaft erwiesen, wenn zumindest eine Klemmbacke am Innendurchmesser der Rohröffnung zur Anlage gebracht werden kann. In einer vorteilhaften Ausführungsform kann das Stabelement zum Positionieren der Inspektionskamera motorisch vorgeschoben und/oder zurückgezogen werden. Durch den motorischen Antrieb des Stabelements wird somit die körperliche Belastung des Bedienpersonals signifikant reduziert und es kann entsprechend Bedienpersonal eingespart werden. Außerdem können erheblich größere Vorschubkräfte von der motorisch angetriebenen Vorschubeinheit auf das Stabelement übertragen werden, so dass in Verbindung mit dem durch die erfindungsgemäße Vorschubeinheit optimierten Kraftfluss wesentlich höhere Reichweiten als beim händischen Betrieb realisierbar sind. Erfindungsgemäß weisen zwei Klemmbacken je eine innenliegende und eine außenliegende Schutzauflage auf. Dies birgt den Vorteil, dass unterschiedliche Arten der Fixierung an einer Rohröffnung vorgenommen werden können. Dabei können zur Fixierung der Vorschubeinheit am Außendurchmesser einer Rohröffnung die beiden innenliegenden Schutzauflagen der Klemmbacken zur Anlage gebracht werden. Es können aber auch zur Fixierune der Vorschubeinheit am Innendurchmesser der Rohröffnung die beiden außenliegenden Schutzauflagen der Klemmbacken zur Verklemmung der Vorschubcinheit innerhalb des Rohrs zur Anlage gebracht werden. Eine dritte Möglichkeit bietet die Fixierung an der Rohrwandune der Rohröffnung, wobei wiederum die beiden innenliegenden Schutzauflagen der Klemmbacken zur Anlage kommen.

Zur exakten und wiederholgenauen Positionierung der Inspektionskamera hat es sich als besonders vorteilhaft erwiesen, wenn das Stabelement im Wesentlichen schlupffrei angetrieben werden kann.

Um eine hohe Klemmkraft aufbringen zu können, ist es weiterhin besonders vorteilhaft, wenn zumindest eine Klemmbacke motorisch antreibbar ist. Durch den motorischen Antrieb der Klemmbacke wird einerseits die körperliche Belastung des Bedienpersonals reduziert und es kann eine exaktere Positionierung der Vorschubeinheit durch das Bedienpersonal erfolgen, da das Bedienpersonal lediglich die Positionierung vornehmen und nicht zusätzlich die Kraft zum Schließen der Klemmbacken aufbringen muss.

Um die Rohröffnung und die Klemmbacken der Vorschubeinheit vor Verschleiß, Deformation und Beschädigungen zu schützen sowie die Haftung der Klammbacken zu erhöhen, hat es sich als vorteilhaft erwiesen, wenn die Klemmbacken zumindest eine Schutzauflage aufweisen. Dabei kommen die Schutzauflagen bei der Fixierung der Vorschubeinheit unmittelbar an der Rohröffnung zur Anlage.

Aus welchem Material die Schutzauflage ausgebildet ist, ist grundsätzlich beliebig. Bevorzugt sollte die Schutzauflage aus einem dämpfenden Material hergestellt sein, um die Klemmbacken und die Rohröffnung ausreichend zu schützen.

Um bei der Inspektion geeignete Daten, beispielsweise für die Durchführung von Reparaturarbeiten an den untersuchten Rohren oder Abwasserkanälen, ermitteln zu können, ist es besonders vorteilhaft, wenn der Vorschub des Stabelements mit einer Vorschubsensorik gemessen werden kann. Die Vorschubsensorik kann dabei entweder in die Vorschubeinheit integriert sein oder an der Haspel zur Messung der Spulbewegung dieser angeordnet sein oder als separate Einheit die Vorschubbewegung des Stabelements messen.

In welcher Weise der Antrieb der Vorschubeinheit am Stabelement realisiert wird, ist grundsätzlich beliebig. Um einen schlupffreien Antrieb des Stabelements zu realisieren, ist es besonders vorteilhaft, wenn die Vorschubeinheit mit einem motorisch antreibbaren Antriebsorgan unmittelbar an der Außenseite des Stabelements reibschlüssig und/oder kraftschlüssig zum Eingriff kommt.

Das Antriebsorgan selbst kann bevorzugt ein motorisch antreibbares Reibrad umfassen. Das Reibrad gelangt dann mit seiner Außenseite an der Außenseite des Stabelements reibschlüssig zum Eingriff und überträgt die zum Antrieb des Stabelements notwendigen Vorschubkräfte reibschlüssig.

Um eine hohe Vorschubkraft reibschlüssig vom Reibrad auf das Stabelement übertragen zu können, ist es weiterhin besonders vorteilhaft, wenn das Reibrad mit einer im Querschnitt konkav profilierten Kontaktfläche an der Außenseite des Stabelements reibschlüssig zum Eingriff kommt. Durch die konkave Profilierung der Kontaktfläche wird ein Anschmiegen des Querschnitts des Reibrads an den Querschnitt des Stabelements ermöglicht, so dass eine größere Reibfläche zur reibschlüssigen Übertragung der Vorschubkräfte zur Verfügung steht. Alternativ bzw. additiv kann das Reibrad auch zu Erhöhung des Reibschlusses zwischen Reibrad und Stabelement mit einer die Reibung erhöhenden Beschichtung ausgestattet sein, wodurch aufgrund des hohen Reibkoeffizienten entsprechend größere Reibkräfte auf gleicher Reibfläche übertragen werden können.

Eine weitere vorteilhafte Möglichkeit zur Erhöhung der mit der Vorschubeinheit auf das Stabelement übertragbaren Vorschubkraft ist es, dass das Antriebsorgan zwei motorisch antreibbare Reibräder umfasst. Vorteilhafterweise werden diese Reibräder gegenüberliegend angeordnet und gelangen von zwei gegenüberliegenden Seiten an der Außenseite des Stabelements reibschlüssig zum Eingriff. Durch den motorischen Antrieb beider Reibräder kann die Vorschubkraft dann auf die beiden Reibräder verteilt und somit insgesamt entsprechend erhöht werden.

Um das Stabelement platzsparend lagern und transportieren zu können sowie aufwandsarm ab- und aufspulen zu können ist es vorteilhafterweise vorgesehen, das Stabelement auf einer Haspel zu speichern. Dazu umfasst die Haspel einen Korb, an dessen Innendurchmesser sich das auf- bzw. abzuspulende Stabelement aufgrund seiner Eigenspannung anlegt. Aufgrund des Bestrebens sich in einer gestreckten Lage zu entspannen, ordnet sich das Stabelement im Korb regelmäßig und in geordneten Lagen übereinander und kann somit auf kleinem Raum gespeichert werden.

Um den Einsatz des Kamerainspektionssystems auch mit nur einer Bedienperson realisieren zu können, ist es besonders vorteilhaft, wenn die Signale der Inspektionskamera zu einem Leitstand übertragen werden, wobei die Vorschubeinheit zur motorischen Positionierung der Inspektionskamera vom Leitstand aus ansteuerbar ist. Im Ergebnis kann eine Bedienperson damit alle für die Inspektion eines Rohres oder Abwasserkanals notwendigen Arbeiten vom Leitstand aus alleine realisieren.

In welcher Weise die Steuerung am Leitstand realisiert wird, ist grundsätzlich beliebig. Bevorzugt sollte am Leitstand ein händisch bedienbares Steuerelement vorgesehen sein, mit dem die Vorschubeinheit zur motorischen Positionierung der Inspektionskamera vom Leitstand angesteuert wird. Das händisch bedienbare Steuerelement kann dabei beispielsweise ein Joystick, ein Touchscreen, ein Drehregler oder Ähnliches sein.

Das Stabelement selbst sollte bevorzugt in der Art eines Glasfaserstabs ausgebildet sein, wobei entweder zumindest ein Kabel in den Kern eingebettet ist oder zumindest ein Kabel um den Glasfaserstab verseilt ist. Eine Ausführungsform der Erfindung ist in den Zeichnungen schematisiert dargestellt und wird nachfolgend beispielhaft erläutert.

Es zeigen:
**Fig. 1** eine erfindungsgemäße Vorschubeinheit für ein Kamerainspektionssystem in seitlicher Ansicht;
**Fig. 2** die Vorschubeinheit gemäß Fig. 1 mit Klemmung an einer Rohrwandung in einem Kanal in seitlicher Ansicht;
Fig. 3 die Vorschubeinheit gemäß Fig. 1 mit Klemmung an einer Revisionsöffnung eines Rohrs in seitlicher Ansicht;
Fig. 4 die Vorschubeinheit gemäß Fig. 1 mit Klemmung am Innendurchmesser eines Rohrs in seitlicher Ansicht.

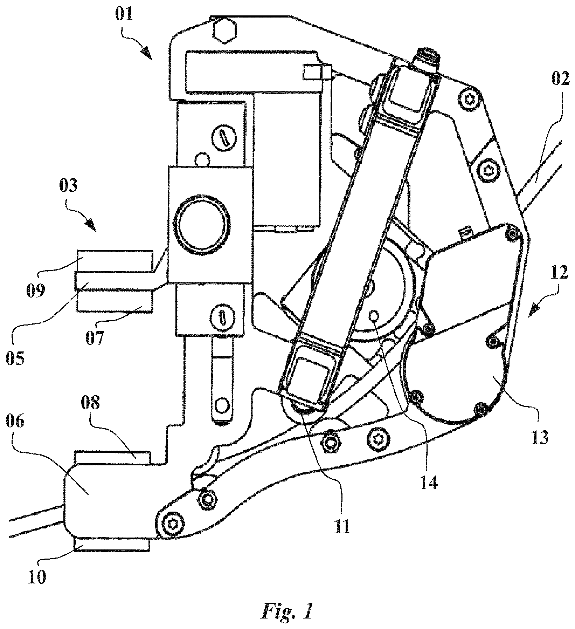

Fig. 1 zeigt eine Vorschubeinheit (01) zur Förderung eines Stabelements (02), an dessen freies Ende eine Inspektionskamera ankoppelbar ist. Das Stabelement (02) ist in der Art eines Glasfaserstabs ausgebildet in dessen Kern Kabel eingebettet sind, um die Signale von der Inspektionskamera nach außen herausführen zu können. Der Vorschub erfolgt über ein Antriebsorgan (12) mit zwei motorisch antreibbaren Reibrädern (13, 14), die aneinander gegenüberliegend angeordnet sind und an den Außenseiten des Stabelements (02) reibschlüssig zum Eingriff kommen. Mittels der Vorschubsensorik (11) kann die Länge des in eine Rohröffnung eingebrachten Stabelements (02) ermittelt werden, wodurch die Bestimmung der Position zur Durchführung von beispielsweise Grabarbeiten zur Reparatur eines Rohrabschnitts ermöglicht wird. Zur Klemmung weist die Klemmeinrichtung (03) der Vorschubeinheit (01) zwei Klemmbacken (05, 06) auf, die jeweils mit zwei innenliegenden und zwei außenliegenden Schutzauflagen (07, 08, 09, 10) versehen sind.

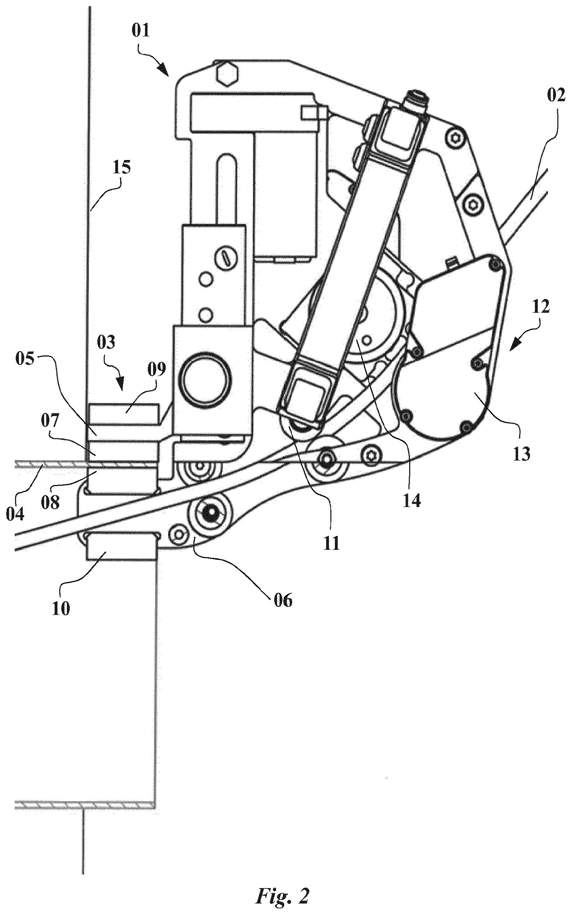

Fig. 2 zeigt die Vorschubeinheit (01) aus Fig. 1 fixiert an der Wandung einer Rohröffnung. Das mittels des Kamerainspektionssystems zu untersuchende Rohr (04) ragt dabei aus einem Kanal (15) hervor. Auch in dieser Darstellung wird das Stabelement (02) über das Antriebsorgan (12) mit zwei Reibrädern (13,14) in das zu untersuchende Rohr (04) eingeschoben. Die Vorschubsensorik (11) dient der Messung der Länge des abgespulten Stabelements (02). Die Klemmeinrichtung (03) weist zwei Klemmbacken (05, 06) mit jeweils einer innenliegenden Schutzauflage (07, 08) und einer außenliegenden Schutzauflage (09, 10) auf, wovon die obere Klemmbacke (05) beweglich ausgeführt ist. Zur Fixierung der Vorschubeinheit (01) an der Rohrwandung wird die obere Klemmbacke (05) geschlossen, so dass die beiden innenliegenden Schutzauflagen (07, 08) jeweils an einer Seite der Rohrwandung zur Anlage kommen.

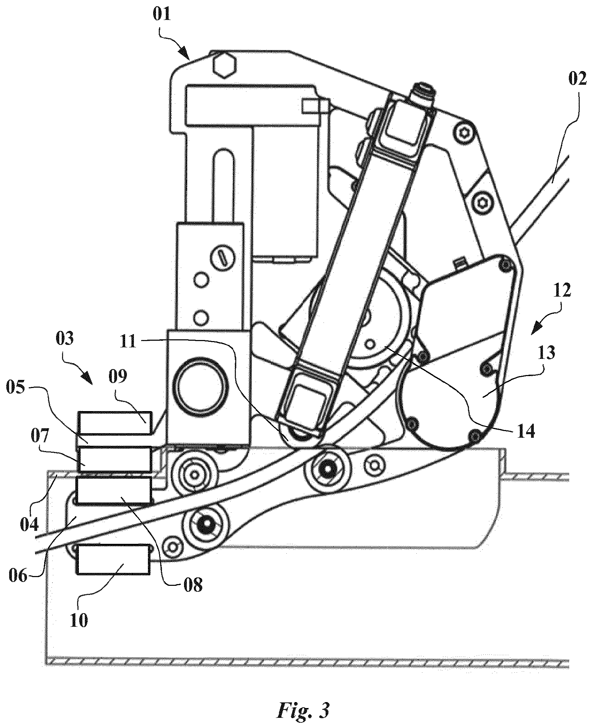

Fig. 3 zeigt die Vorschubeinheit (01) fixiert an einer Revisionsöffnung eines Rohrs (04). Das Stabelement (02) wird mittels des Antriebsorgans (12) motorisch in das Rohr (04) eingebracht, wobei zwei Reibräder (13, 14) gegenüberliegend an der Außenseite des Stabelements (02) reibschlüssig zum Eingriff kommen. Die innenliegende Schutzauflage (07) der beweglichen Klemmbacke (05) liegt außerhalb der Revisionsöffnung am Rohr (04) an, und die innenliegende Schutzauflage (08) der anderen Klemmbacke (06) liegt zur Fixierung der Vorschubeinheit (01) innerhalb der Revisionsöffnung an der Rohrwandung an. Zudem sind die außenliegenden Schutzauflagen (09, 10) dargestellt, denen jedoch bei dieser Nutzungsart die lediglich eine Schutzfunktion zukommt. Um nicht nur die Daten der Inspektionskamera selbst an den Leitstand zu übermitteln, sondern auch eine Messung der Länge des eingeführten Stabelements (02) realisieren zu können, ist eine Vorschubsensorik (11) an der Vorschubeinheit (01) angebracht.

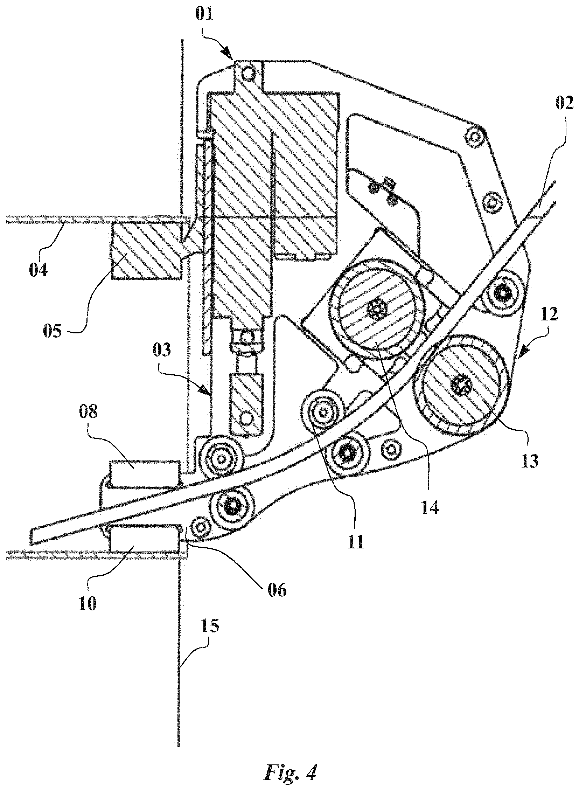

**Fig. 4** zeigt die Vorschubeinheit (01) fixiert an einer Rohröffnung, wobei das Rohr (04) hierbei nicht aus dem Kanal (15) herausragt sondern nahezu vollständig in diesem verschwindet. Deshalb ist es zur Fixierung erforderlich, dass die außenliegende Schutzauflage (10) einer Klemmbacke (06) am Innendurchmesser der Rohröffnung positioniert wird und die außenliegende Schutzauflage (09) der beweglichen Klemmbacke (05) gegenüberliegend am Innendurchmesser der Rohröffnung zur Anlage gebracht wird. Bei dieser Art der Fixierung schützen die innenliegenden Schutzauflagen (07, 08) die Klemmbacken (05, 06) zusätzlich. Die Klemmeinrichtung (03) kann somit durch Einführung der Klemmbacken (05, 06) in die Rohröffnung auch zur Fixierung der Vorschubeinheit (01) an schwer zugänglichen Rohröffnungen genutzt werden. Um das Bedienpersonal zu entlasten ist an der Vorschubeinheit (01) ein Antriebsorgan (12) mit reibschlüssig am Stabelement (02) angreifenden Reibrädern (13, 14) vorgesehen. Die von der Vorschubsensorik (11) ermittelten Daten werden an den Leitstand übertragen und können beispielsweise zur Planung von Reparatur oder Revisionsarbeiten genutzt werden.

## Patentansprüche

1. Vorschubeinheit (01) mit einem biegsamen Stabelement (02) für ein Kamerainspektionssystem, wobei das Stabelement (02) vorschiebbar und/oder zurückziehbar ist, und wobei an das freie Ende des Stabelements (02) eine Inspektionskamera koppelbar ist,
dadurch**gekennzeichnet,**
dass an der Vorschubeinheit (01) eine Klemmeinrichtung (03) vorgesehen ist, mit der die Vorschubeinheit (01) an einer Rohröffnung (04) fixierbar ist, wobei die Klemmeinrichtung (03) zwei Klemmbacken (05, 06) aufweist, und wobei zumindest eine Klemmbacke (05, 06) beweglich ausgebildet ist, wobei zumindest eine Klemmbacke am Innendurchmesser der Rohröffnung (4) zur Anlage bringbar ist, wobei die zwei Klemmbacken (05, 06) je eine innenliegende und eine außenliegende Schutzauflage (07, 08, 09, 10) aufweisen, wobei die beiden innenliegenden Schutzauflagen (07, 08) zur Fixierung am Außendurchmesser der Rohröffnung oder die beiden außenliegenden Schutzauflagen (09, 10) zur Fixierung am Innendurchmesser der Rohröffnung (04) oder die beiden innenliegenden Schutzauflagen (07, 08) zur Fixierung an einer Rohrwandung zur Anlage kommen können.

2. Vorschubeinheit nach Anspruch 1,
dadurch**gekennzeichnet,**
dass das Stabelement (02) zum Positionieren der Inspektionskamera motorisch vorgeschoben und/oder zurückgezogen werden kann.

3. Vorschubeinheit nach Anspruch 1 oder 2,
dadurch**gekennzeichnet,**
dass das Stabelement (02) im Wesentlichen schlupffrei angetrieben werden kann.

4. Vorschubeinheit nach einem der Ansprüche 1 bis 3,
dadurch**gekennzeichnet,**
dass zumindest eine Klemmbacke (05, 06) motorisch antreibbar ist.

5. Vorschubeinheit nach einem der Ansprüche 1 bis 4,
dadurch**gekennzeichnet,**
dass die Klemmbacke (05, 06) zumindest eine Schutzauflage (07, 08, 09, 10) aufweist, wobei die Schutzauflage (07, 08, 09, 10) bei Fixierung der Vorschubeinheit (01) unmittelbar an der Rohröffnung (04) zur Anlage kommt.

6. Vorschubeinheit nach einem der Ansprüche 1 bis 5,
dadurch**gekennzeichnet,**
dass die Schutzauflage (07) aus einem dämpfenden Material hergestellt ist.

7. Vorschubeinheit nach einem der Ansprüche 1 bis 6,
dadurch**gekennzeichnet,**
dass der Vorschub des Stabelements (02) mit einer Vorschubsensorik (11) gemessen werden kann.

8. Vorschubeinheit nach einem der Ansprüche 1 bis 7,
dadurch**gekennzeichnet,**
dass ein motorisch antreibbares Antriebsorgan (12) unmittelbar an der Außenseite des Stabelements (02) reibschlüssig und/oder kraftschlüssig zum Eingriff kommt.

9. Vorschubeinheit nach Anspruch 8,
dadurch**gekennzeichnet,**
dass das Antriebsorgan (12) zumindest ein motorisch antreibbares Reibrad (13, 14) umfasst, das an der Außenseite des Stabelements (02) reibschlüssig zum Eingriff kommt.

10. Vorschubeinheit nach Anspruch 9,
dadurch**gekennzeichnet,**
dass das Reibrad (13, 14) mit einer im Querschnitt konkav profilierten Kontaktfläche an der Außenseite des Stabelements (02) reibschlüssig zum Eingriff kommt.

11. Vorschubeinheit nach einem der Ansprüche 8 bis 10,
dadurch**gekennzeichnet,**
dass das Antriebsorgan (12) zwei motorisch antreibbare Reibräder (13, 14) umfasst, die einander gegenüberliegend angeordnet sind und von zwei gegenüberliegenden Seiten an der Außenseite des Stabelements (02) reibschlüssig zum Eingriff kommen.

12. Vorschubeinheit nach einem der Ansprüche 1 bis 11,
dadurch**gekennzeichnet,**
dass ein Kamerasignal der Inspektionskamera zu einem Leitstand übertragbar ist, wobei die Vorschubeinheit (01) zur motorischen Positionierung der Inspektionskamera vom Leitstand ansteuerbar ist.

## Claims

1. A thrust unit (01) having a flexible rod element (02) for a camera inspection system, the rod element (02) being displaceable and/or retractable, and an inspection camera being coupled to the free end of the rod element (02),
**characterised in that**
a clamping device (03), by means of which the thrust unit (01) is fixated to a tube opening (04), is provided on the thrust unit (01), the clamping device (03) comprising two clamping jaws (05, 06), and at least one clamping jaw (05, 06) being realised so as to be moveable, at least one clamping jaw abutting against the inner diameter of the tube opening (04), wherein the two clamping jaws (05, 06) each have an inner and an outer protective cover (07, 08, 09, 10), the two inner protective covers (07, 08) abutting against the outer diameter of the tube opening for fixating purposes or the two outer protective covers (09, 10) abutting against the inner diameter of the tube opening (04) for fixating purposes or the two inner protective covers (07, 08) abutting against a tube wall for fixating purposes.

2. The thrust unit according to claim 1,
**characterised in that**
the rod element (02) is thrust and/or retracted by motor for positioning the inspection camera.

3. The thrust unit according to claim 1 or 2,
**characterised in that**
the rod element (02) is driven in an essentially slip-free manner.

4. The thrust unit according to any one of the claims 1 to 3,
**characterised in that**
at least one clamping jaw (05, 06) is driven by motor.

5. The thrust unit according to any one of the claims 1 to 4,
**characterised in that**
the clamping jaw (05, 06) comprises at least one protective cover (07, 08, 09, 10), the protective cover (07, 08, 09, 10) directly abutting against the tube opening (04) when the thrust unit (01) is fixated.

6. The thrust unit according to any one of the claims 1 to 5,
**characterised in that**
the protective cover (07) is produced from a damping material.

7. The thrust unit according to any one of the claims 1 to 6,
**characterised in that**
the thrust of the rod element (02) is measured using a thrust sensor (11).

8. The thrust unit according to any one of the claims 1 to 7,
**characterised in that**
a drive means (12) driven by motor is engaged directly on the outside of the rod element in a friction-locking and/or non-positive manner.

9. The thrust unit according to claim 8,
**characterised in that**
the drive means (12) comprises at least one friction wheel (13, 14) which is driven by motor and engages on the outside of the rod element (12) in a friction-locking manner.

10. The thrust unit according to claim 9,
**characterised in that**
the friction wheel (13, 14) engages with a contact surface, which has a concavely profiled cross section, on the outside of the rod element (02) in a friction-locking manner.

11. The thrust unit according to any one of the claims 8 to 10,
**characterised in that**
the drive means (12) comprises two friction wheels (13, 14) which are driven by motor, are disposed opposite each other and engage on the outside of the rod element (02) in a friction-locking manner from opposite sides.

12. The thrust unit according to any one of the claims 1 to 11,
**characterised in that**
a camera signal of the inspection camera is transmitted to a control station, the thrust unit (01) being controllable by the control station for positioning the inspection camera by motor.

## Revendications

1. Unité de poussée (01) ayant un élément de tige (02) flexible pour un système d'inspection à caméra, l'élément de tige (02) étant déplaçable et/ou rétractable, et une caméra d'inspection étant couplée à une extrémité libre de l'élément de tige (02),
**caractérisée en ce**
**qu'**un dispositif de serrage (03), au moyen duquel l'unité de poussée (01) est fixée à une ouverture de tube (04), est prévu sur l'unité de poussée (01), le dispositif de serrage (03) comprenant deux mâchoires de serrage (05, 06), et au moins une mâchoire de serrage (05, 06) étant réalisée de manière à être mobile, au moins une mâchoire de serrage venant en appui contre le diamètre intérieur de l'ouverture de tube (04), dans lequel les deux mâchoires de serrage (05, 06) ont chacune un couvercle de protection (07, 08, 09, 10) intérieur et extérieur, les deux couvercles de protection (07, 08) intérieurs venant en appui contre le diamètre extérieur de l'ouverture de tube à des fins de fixation ou les deux couvercles de protection (09, 10) extérieurs venant en appui contre le diamètre intérieur de l'ouverture de tube (04) à des fins de fixation ou les deux couvercles de protection (07, 08) intérieurs venant en appui contre une paroi de tube à des fins de fixation.

2. Unité de poussée selon la revendication 1,
**caractérisée en ce que**
l'élément de tige (02) est poussé et/ou rétracté par moteur afin de positionner la caméra d'inspection.

3. Unité de poussée selon la revendication 1 ou 2,
**caractérisée en ce que**
l'élément de tige (02) est entraîné essentiellement sans glissement.

4. Unité de poussée selon l'une quelconque des revendications 1 à 3,
**caractérisée en ce**
**qu'**au moins une mâchoire de serrage (05, 06) est entraînée par moteur.

5. Unité de poussée selon l'une quelconque des revendications 1 à 4,
**caractérisée en ce que**
la mâchoire de serrage (05, 06) comprend au moins un couvercle de protection (07, 08, 09, 10), le couvercle de protection (07, 08, 09, 10) venant en appui directement contre l'ouverture de tube (04) quand l'unité de poussée (01) est fixée.

6. Unité de poussée selon l'une quelconque des revendications 1 à 5,
**caractérisée en ce que**
le couvercle de protection (07) est produit d'un matériau atténuant.

7. Unité de poussée selon l'une quelconque des revendications 1 à 6,
**caractérisée en ce que**
la poussée de l'élément de tige (02) est mesurée en utilisant un capteur de poussée (11).

8. Unité de poussée selon l'une quelconque des revendications 1 à 7,
**caractérisée en ce**
**qu'**un moyen d'entraînement (12) entraîné par moteur s'engage directement sur l'extérieur de l'élément de tige (02) par friction et/ou par adhérence.

9. Unité de poussée selon la revendication 8,
**caractérisée en ce que**
le moyen d'entraînement (12) comprend au moins une roue de friction (13, 14) qui est entraînée par moteur et s'engage par friction sur l'extérieur de l'élément de tige (12).

10. Unité de poussée selon la revendication 9,
**caractérisée en ce que**
la roue de friction (13, 14) s'engage avec une surface de contact, dont la section transversale est profilée de manière concave, par friction sur l'extérieur de l'élément de tige (02).

11. Unité de poussée selon l'une quelconque des revendications 8 à 10,
**caractérisée en ce que**
le moyen d'entraînement (12) comprend deux roues de friction (13, 14) qui sont entraînées par moteur, qui sont disposées l'une en face de l'autre et qui s'engagent par friction sur l'extérieur de l'élément de tige (02) de deux côtés opposés.

12. Unité de poussée selon l'une quelconque des revendications 1 à 11,
**caractérisée en ce**
**qu'**un signal de caméra de la caméra d'inspection est transmis à un poste de commande, l'unité de poussée (01) étant contrôlée par le poste de commande afin de positionner par moteur la caméra d'inspection.
